# EUROPEAN PATENT APPLICATION

(11) **EP 4 530 900 A1**
(43) Date of publication of application: **02.04.2025**
(21) Application number: 24196537.5
(22) Date of filing: 26.08.2024
(51) Int. Cl.: G06F 21/57, H04L 9/08, H04L 9/32

(54) **APPARATUS, DEVICE, METHOD, AND COMPUTER PROGRAM FOR PROVIDING A CERTIFICATE CHAIN**

(30) Priority: 26.09.2023 US 202318474283
(71) Applicant: INTEL Corporation, Santa Clara, CA 95054 (US)
(72) Inventor: RUAN, Xiaoyu, Folsom, 95630 (US); STEVENS JR., William, Folsom, 95630 (US)
(74) Representative: 2SPL Patentanwälte PartG mbB

(57) **Abstract**

Various examples relate to an apparatus, a device, a method, and a computer program for a computing device, for providing a certificate chain, and to a computing device. An apparatus comprises processor circuitry to obtain information on an identity of a firmware being used to operate the computing device, generate a leaf certificate for the firmware being used to operate the computing device based on the identity of the firmware being used to operate the computing device and using an intermediate certificate being generated based on an identity of a firmware having been used during a cold boot of the computing device, and provide a certificate chain comprising the leaf certificate for an external verifier.

## Description

### Background

Seamless updates are usually applied when the firmware running on a datacenter SoC (System-on-Chip) is found to be vulnerable and is to be updated to a newer firmware version that fixes the vulnerability. However, the security module may not be able to attest the security enhancement of a seamlessly patched firmware beyond the boot-time firmware. This dilutes the value of seamless patches, as a server reboot is required for the security enhancement to be attestable. But a server reboot takes a long time and should therefore be avoided.

### Brief description of the Figures

Some examples of apparatuses and/or methods will be described in the following by way of example only, and with reference to the accompanying figures, in which:
- Fig. 1a: shows a schematic diagram of an example of an apparatus or device for a computing device, and of a computing device comprising such an apparatus or device;
- Fig. 1b: shows a flow chart of an example of a method for a computing device;
- Fig. 2: shows a schematic diagram of a seamless firmware update;
- Fig. 3: shows a schematic diagram of a Read-Only Memory (ROM) firmware deriving two persistent keys and one Leaf Alias Private Key during cold boot;
- Fig. 4: shows a schematic diagram of the relationship between private keys, public keys, and certificates;
- Fig. 5: shows a DICE certificate chain before a first seamless update;
- Fig. 6: shows a schematic diagram of the ROM firmware deriving a new Leaf Alias Private Key during seamless update;
- Fig. 7: shows a Device Identifier Composition Engine (DICE) certificate chain after a seamless update; and
- Fig. 8: shows an example flow for cold boot and seamless update.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

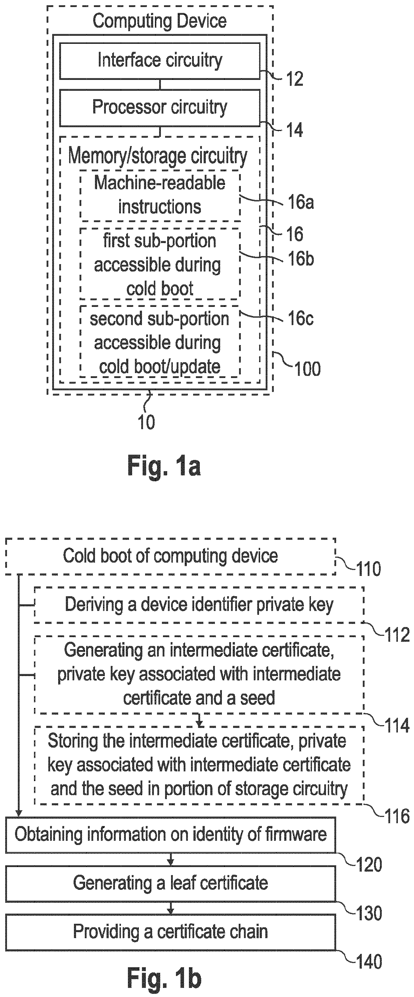

Fig. 1a shows a schematic diagram of an example of an apparatus 10 or device 10 for a computing device 10. The apparatus 10 comprises circuitry to provide the functionality of the apparatus 10. For example, the circuitry of the apparatus 10 may be configured to provide the functionality of the apparatus 10. For example, the apparatus 10 of Fig. 1a comprises interface circuitry 12, processor circuitry 14, and (optional) memory/storage circuitry 16. For example, the processor circuitry 14 may be coupled with the interface circuitry 12 and/or with the memory/storage circuitry 16. For example, the processor circuitry 14 may provide the functionality of the apparatus, in conjunction with the interface circuitry 12 (for communicating with other entities inside or outside the computing device 100), and the memory/storage circuitry 16 (for storing information, such as machine-readable instructions). Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1a comprises means for processing 14, which may correspond to or be implemented by the processor circuitry 14, means for communicating 12, which may correspond to or be implemented by the interface circuitry 12, (optional) means for storing information 16, which may correspond to or be implemented by the memory or storage circuitry 16. In general, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions 16a, e.g., within the memory or storage circuitry 16 or means for storing information 16.

The processor circuitry 14 or means for processing 14 is to obtain information on an identity of a firmware being used to operate the computing device. The processor circuitry 14 or means for processing 14 is to generate a leaf certificate for the firmware being used to operate the computing device based on the identity of the firmware being used to operate the computing device and using an intermediate certificate being generated based on an identity of a firmware having been used during a cold boot of the computing device. The processor circuitry 14 or means for processing 14 is to provide a certificate chain comprising the leaf certificate for an external verifier.

In some examples, the memory or storage circuitry 16 or means for storing information comprises at least one portion 16b; 16c that is not accessible during normal operation of the apparatus 10, device 10 or computing device 100. For example, the memory or storage circuitry 16 or means for storing information 16 may comprise a portion 16b; 16c that is accessible during a cold boot or after a seamless update of the computing device. In some examples, a first sub-portion 16b of the portion may only be accessible during a cold boot of the computing device (and used to store a unique device secret of the computing device), and a second sub-portion 16c may be accessible during the cold boot and after a seamless update (e.g., during a warm boot/reset).

Fig. 1a further shows the computing device 100 comprising the apparatus 10 or device 10. For example, the computing device 100 may be a computer system, such as a server computer system, a workstation computer system, a desktop computer system, a laptop computer system, or an Internet-ofThings (IoT) computer system. Alternatively, the computing device 100 may be a mobile device, such as a smartphone, a tablet computer, a wearable device, or a vehicle.

Fig. 1b shows a flow chart of an example of a corresponding method for the computing device 100. The method comprises obtaining 120 information on an identity of a firmware being used to operate the computing device. The method comprises generating 130 a leaf certificate for the firmware being used to operate the computing device based on the identity of the firmware being used to operate the computing device and using an intermediate certificate being generated based on an identity of a firmware having been used during a cold boot of the computing device. The method comprises providing 140 a certificate chain comprising the leaf certificate for an external verifier. For example, the method may be performed by the computing device 100, e.g., by the apparatus 10 or device 10 of the computing device 100.

In the following, the features of the apparatus 10, device 10, computing device 100, method and of a computer program will be illustrated in more detail with reference to apparatus 10. Features introduced in connection with the apparatus 10 may likewise be introduced in the corresponding device 10, computing device 100, method and computer program.

Various examples of the present disclosure relate to the generation of a leaf certificate for the firmware of a computing device, and to the provision of a certificate chain including the leaf certificate. This is generally done as part of device attestation. Device attestation is a process used to verify the authenticity and integrity of a device. It involves generating a unique identifier, often referred to as a device ID or fingerprint, for a device and then attesting its authenticity to a trusted entity, such as a server or service. This ensures that only trusted devices are allowed access to certain resources or services on the server or service. Device attestation typically involves the use of cryptographic techniques, such as digital signatures or certificates, to securely prove the identity of the device. In the present context, the leaf certificate and the certificate chain are used for the purpose of device attestation, to prove to an external entity that the computing device is trustworthy, e.g., to show that the computing device is operating using a firmware that does not include known vulnerabilities. Accordingly, the certificate chain comprising the leaf certificate may be provided to the external verifier as part of a device attestation protocol.

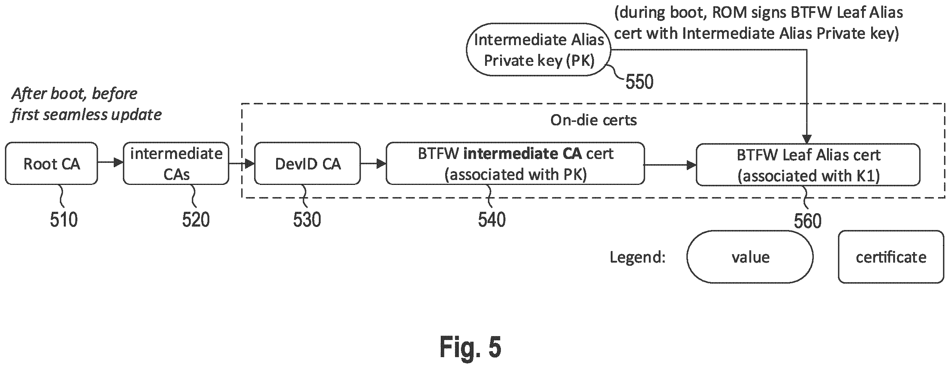

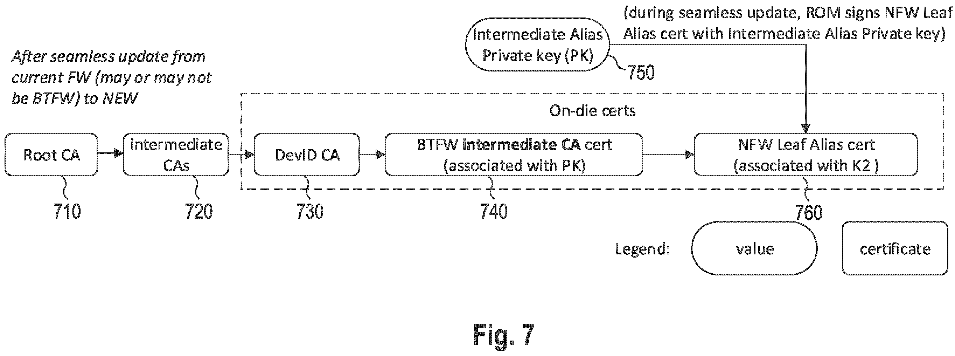

For example, the device attestation being performed using the certificate chain may be performed by creating a so-called hardware root of trust certificate chain. The certificate chain starts with a root certificate issued by a root certificate authority (usually the hardware vendor), which is used to sign or attest to the authenticity and identity of the hardware root of trust itself. The certificate chain includes one or more further intermediate certificates (outside and inside the computing device, as illustrated in Figs. 5 and 7) and ends with the leaf certificate that is used to prove the authenticity of the computing device. For example, the intermediate certificate and the leaf certificate are part of a hardware root of trust certificate chain. In Fig. 5, the leaf certificate is denoted BTFW (Boot-Time Firmware) Leaf Alias cert 560 and is generated for the firmware being used during a cold boot of the computing device, and in Fig. 7, the leaf certificate is denoted NFW (New Firmware) Leaf Alias Cert 760 and is generated for a firmware being used to operate the computing device after a seamless update. In addition, the certificate chain (comprising certificates 510-540, 560,and 710-740, 760, respectively) comprises the intermediate certificate, which is denoted BTFW intermediate CA cert 540, 740 in Figs. 5 and 7.

In a particular implementation, the proposed concept was used to improve the security of the DICE (Device Identifier Composition Engine) certificate chain. Accordingly, the hardware root of trust certificate chain may be a DICE certificate chain. The device identifier composition engine is a software or firmware mechanism or module responsible for generating and managing unique identifiers for devices. It is commonly used in systems that require device identification for various purposes, such as device management, security, and authentication.

As is evident from Figs. 5 and 7, while the proposed concept may also be used in computing device on which firmware updates are only ever applied during a cold boot, the motivation behind the proposed concept lies in the use of seamless updates. Seamless updates are updates to the firmware of the computing device that do not require a cold boot of the computing device (which may require a comparatively long time) but can be applied at run-time or with a warm boot. However, such seamless update may interfere with device attestation, as, for security reasons, device secrets required for generating the leaf certificate are only accessible during cold boot. In particular, a unique device secret (UDS) may, in some other concepts, be used to generate the leaf certificate. However, the unique device secret may be unavailable after cold boot of the computing device.

In the proposed concept, this limitation is circumvented by adding another certificate into the root of trust, the intermediate certificate (shown as BTFW intermediate CA cert 540, 740 in Figs. 5 and 7). In the proposed concept, the intermediate certificate is generated using the UDS, and subsequently used to derive the information used to sign the leaf certificate. As further reference, in addition to the UDS, the identity (e.g., a firmware version number and/or a hash of the firmware) of the firmware used during a cold boot may be used to generate the intermediate certificate, to not only include information on the firmware currently used for operating the computing device, but also information on the firmware being used during the cold boot of the computing device into the certificate chain. In effect, the intermediate certificate may be generated based on the unique device secret of the computing device and based on the identity of the firmware having been used during a cold boot of the computing device.

As is evident that at least the intermediate certificate is generated during the cold boot of the computing device. In various examples, various certificates and keys being used for the proposed concept are prepared (and stored) during the cold boot, to be used both during cold both (to generate the leaf certificate for the firmware used during the cold boot) and after a seamless update (to generate the leaf certificate for the firmware installed by the seamless update).

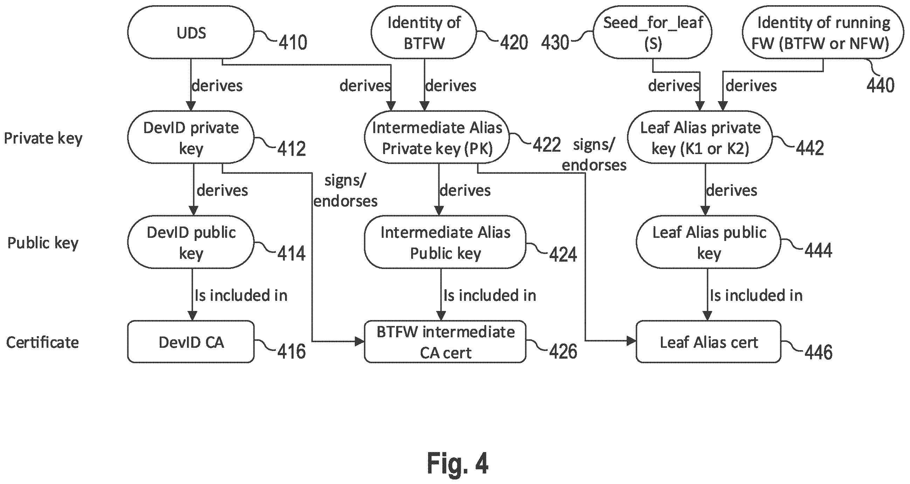

In Fig. 4, an overview is given of the various certificates, private and public keys and seeds being used in some examples of the proposed concept. Fig. 4 shows the UDS 410 and the identity 420 of the firmware used during the cold boot of the computing device (BTFW, boot-time firmware), which may be used to generate the intermediate alias private key 422 being used to a) sign the leaf alias certificate 446, and b) generate the intermediate certificate 426 (by deriving the intermediate public key 424 being included in the intermediate certificate 426). In addition, the Seed_for _Leaf 430 (a seed for generating the leaf certificate) is shown, which is later used to generate the leaf private key 442, from which the leaf public key 444 being included in the leaf certificate 446 is derived. In effect, the processor circuitry may generate the leaf certificate using the intermediate certificate and using the seed. For example, as shown in Fig. 4, the leaf certificate 446 may be generated (e.g., signed, endorsed) using the intermediate certificate 422 and includes the leaf public key 444 derived from the seed 430 and the identity 440 of the firmware being used to operate the computing device.

These components (422, 424, 426 and 430) may be generated (and stored) during the cold boot of the computing device, e.g., so that the UDS 410 does not have to be unlocked after the cold boot and such that the Seed_for_Leaf 430 cannot be altered after the cold boot. The processor circuitry may generate, during a cold boot of the computing device, the intermediate certificate (and thus the public key associated with the intermediate certificate), the private key associated with the intermediate certificate, and the seed for generating the leaf certificate. Accordingly, as further shown in Fig. 1b, the method may comprise generating 114, during the cold boot of the computing device, the intermediate certificate, the private key associated with the intermediate certificate, and the seed for generating the leaf certificate. The processor circuitry may store the intermediate certificate, the private key associated with the intermediate certificate and the seed in a portion 16b; 16c (e.g., a second sub-portion 16c thereof) of the storage circuitry 16 accessible (only) during the cold boot or after a seamless update of the computing device. Accordingly, as further shown in Fig. 1b, the method may comprise storing 116 the intermediate certificate, the private key associated with the intermediate certificate and the seed in the portion 16b of the storage circuitry 16 accessible (only) during the cold boot or after a seamless update of the computing device. The identity 420 of the boot-time firmware and the identity 440 of the currently running firmware (which are identical during cold boot) are public (and static, for the respective firmware) information and do not have to be generated during cold boot.

In addition to the intermediate certificate (and corresponding keys), also the device identifier keys 412, 414 and device identifier certificate 416 may be generated during cold boot of the computing device based on the unique device secret. The processor circuitry may derive, during a cold boot of the computing device, the device identifier private key from the unique device secret of the computing device (and derive the corresponding public key 414 and certificate 416 from the device identifier private key 412). Accordingly, as further shown in Fig. 1b, the method may comprise deriving 112, during a cold boot of the computing device, the device identifier private key from the unique device secret of the computing device. The intermediate certificate may now be signed or endorsed by the device identifier private key.

The intermediate certificate (or rather the private key associated with the intermediate certificate) may now be used to generate the leaf certificate, based on the identity of the firmware being used to operate the computing device (at the time the leaf certificate is being generated). As outlined above, the identity of the firmware may comprise an identifier of the firmware (e.g., a version number) and/or a hash value characterizing the firmware. This information on the identity of the firmware being used to operate the computing device (identity 440 of running firmware in Fig. 4) may be read out from the firmware being used to operate the computing device, for example. The processor circuitry generates the leaf certificate for this particular firmware, e.g., by deriving the leaf private key 442 from the seed 430 and the identity 440 of the firmware being used to operate the computing device, deriving the leaf public key 444 from the leaf private key 442, including the leaf public key 444 in the leaf certificate 446, and signing/endorsing the leaf certificate 446 using the private key 422 associated with the intermediate certificate 426. As outlined above, this process may be repeated for each firmware being used to operate the computing device, e.g., for the firmware being used to the cold boot, and for any subsequent firmware being applied through a seamless firmware update. In other words, the processor circuitry may generate the leaf certificate, after a seamless firmware update, for the firmware being used after the seamless firmware update. For example, the firmware being used after the seamless firmware update may be different from the firmware having been used before the seamless update, which may be the firmware being used during the cold boot of the computing device or another firmware being applied during a previous seamless firmware update. In some examples, it is even possible that the firmware being applied in a firmware update corresponds to the firmware being used during the cold boot of the computing device, e.g., if another firmware is applied using a seamless firmware update and a subsequent seamless firmware update (being a downgrade) to the firmware being used during the cold boot is applied.

A major application of the proposed concept is the subsequent generation of leaf certificates for the firmware being used during the cold boot and any firmware being applied through a seamless update. In this case, the processor circuitry may generate a first leaf certificate for the firmware having been used during the cold boot of the computing device (i.e., the boot-time firmware) during the cold boot of the computing device, and to generate a second leaf certificate, after the seamless firmware update, for the firmware being used after the seamless firmware update (i.e., the new firmware).

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory or storage circuitry 16 or means for storing information 16 may a volatile memory, e.g., random access memory, such as dynamic random-access memory (DRAM), and/or comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

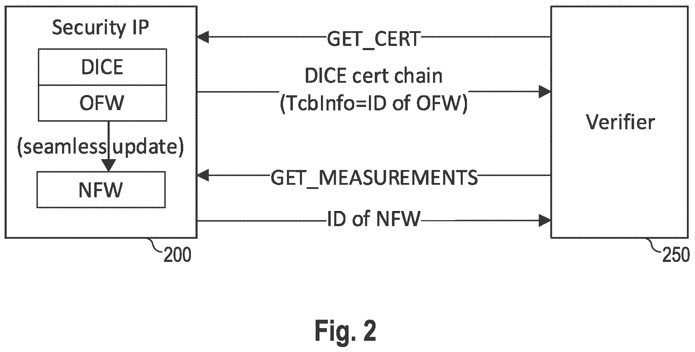

More details and aspects of the apparatus 10, device 10, computing device 100, method and computer program are mentioned in connection with the proposed concept, or one or more examples described above or below (e.g., Fig. 2 to 8). The apparatus 10, device 10, computing device 100, method and computer program may comprise one or more additional optional features corresponding to one or more aspects of the proposed concept, or one or more examples described above or below.

Various examples of the present disclosure relate to a concept for a certificate chain construction (e.g., Device Identifier Composition Engine, DICE, certificate chain construction) for seamless firmware update.

The Caliptra specification, a specification for an open-source silicon root of trust (RoT), states that the DICE certificate chain created for OFW ("Old Firmware", usually the boot-time firmware) shall be preserved across seamless update, "because it is unsafe to unlock UDS (Unique Device Secret) again, and infeasible to extend the DICE hierarchy with the new firmware's measurements". In other words, the Alias key and Alias certificate corresponding to the OFW are passed to NFW ("New Firmware", the firmware being installed through a seamless update) and used by the NFW. The NFW uses this Alias key and certificate to report its own measurement to a verifier over SPDM (Security Protocol and Data Model). This is shown in Fig. 2.

Fig. 2 shows a schematic diagram of a seamless firmware update according to the Caliptra specification. Fig. 2 shows, on the left, a security intellectual property (IP) block 200, comprising the DICE chain for the OFW, which is subsequently, after the seamless update, also used for the NFW. The verifier 210 (shown on the right) issues the GET_CERT (get certificate) command to the security IP 200, which responds with the DICE cert chain that is based on the OFW. Subsequently, the verifier 210 issues the GET_MEASUREMENTS command, with the security IP block 200 responding with the identifier of the NFW. According to the specification, the OFW may report the identity of the NFW (or any ID of a firmware according to its wishes), which may be considered detrimental to security. If the OFW is vulnerable (recall this is the reason of applying seamless updates), the Verifier in the Caliptra method (shown in Fig. 2) has no way to confirm that the seamless update to NFW indeed happened. The vulnerable OFW could report the identity of the NFW (or rather, identity of any firmware that the verifier would accept) to the verifier and pretend that an update had happened. This may cause serious security consequences if the verifier trusted the report and loaded assets to the Security IP 200 still running the OFW.

The proposed concept introduces an intermediate layer in the DICE certificate chain. In the proposed concept, when obtaining the DICE certificate chain from the security engine after a seamless update, the DICE certificate chain is based on the intermediate layer. By using this intermediate layer, the proposed concept does not need to unlock UDS at runtime but can still issue an alias certificate with the NFW's measurements after a seamless update. The proposed concept may thus address the security concern.

Various examples of the present disclosure are based on the use of an intermediate certificate authority (CA) reflecting the boot-time firmware for issuing an Alias certificate to the current runtime firmware, before or after a seamless update. A dedicated certificate revocation list (CRL) may be used for revoking the intermediate CA.

In the following, construction of the (DICE) certificate chain during boot is illustrated. During manufacturing, the vendor provisions a UDS (unique per part) and the associated certificate to the ROM (Read-Only Memory) of the security IP. The certificate's serial number is unique per part.

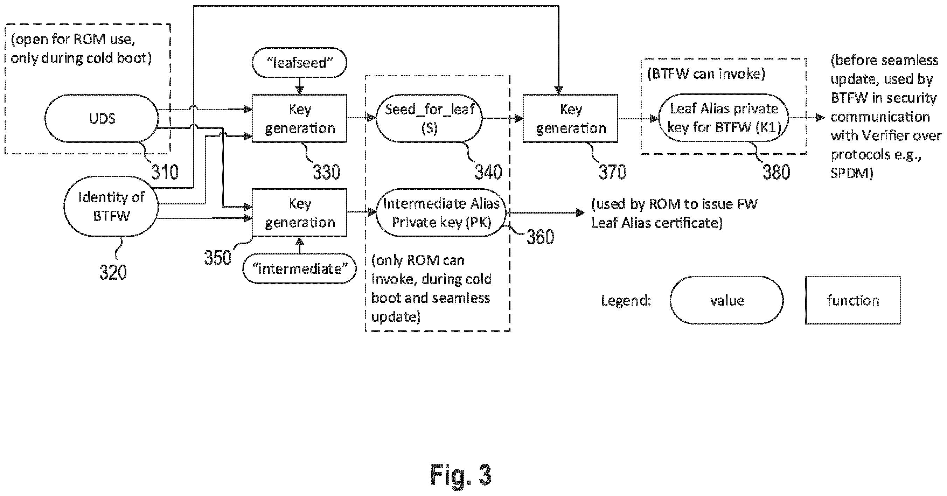

Fig. 3 shows a schematic diagram of the Read-Only Memory firmware deriving two persistent keys and one Leaf Alias Private Key during cold boot. As shown in Fig. 3, during (cold) boot, the ROM derives two persistent keys from UDS 310 and the identity 320 of the boot time FW (BTFW): The "Seed for Leaf' ("S") 340 (using a key generation block 330 and a "leafseed" seed), which is used, together with the runtime firmware identity 320, to generate 370 the Leaf Alias (private) Key 380. In other words, the ROM also derives a "Leaf Alias private key for BTFW" ("K1") from S and the identity of BTFW. In addition, the ROM derives, using key generation block 350, the persistent key "Intermediate Alias Private Key" ("PK"), which is used to sign and issue the Leaf Alias certificate. The Seed_for_Leaf (S) 340 and the Intermediate Alias Private Key 360 are stored in a portion of memory that only the ROM can invoke, during cold boot and seamless update. "Persistent" here refers to the fact that the two keys are stored in a dedicated key store hardware block, and their values do not change across seamless updates. UDS is only open for ROM to use during cold boot. After then, UDS is locked, until the next cold boot.

The S and PK reflect the BTFW's identity (i.e., before the first seamless update). During boot time and seamless update, S will be used as the seed for deriving the Leaf Alias Private Key for the firmware that will be running. The S 340 itself may be generated or derived from the following values - the UDS 310, the BTFW's identity (which may be a firmware version, security version, hash of firmware binary, or some other identity), and a seed string ("leafseed" in Fig, 3, or some other string).

During boot time and seamless update, the PK may sign the Leaf Alias certificate for the firmware that is running. The PK itself may be generated or derived from the following values: The UDS 310, the BTFW's identity 320, and another seed string ("intermediate" in Fig. 3 or some other string different from the seed string of S). The relationship between various private keys, corresponding public keys, and certificates that contain the public keys is illustrated in Fig. 4. Fig. 4 shows a schematic diagram of the relationship between private keys, public keys and certificates. As shown in Fig. 4, the UDS 410 may be used to derive a DevID (Device Identifier) private key 410 and, together with the identity 420 of the boot-time firmware, the Intermediate Alias Private Key (PK) 422. The DevID private key 412 may be used to derive the DevID public key 414, which is included in the DevID CA (Certificate Authority) 416, i.e., a certificate. The Intermediate Alias Private Key 422 may be used to derive the Intermediate Alias Public Key 424, which is included in the Boot-Time Firmware Intermediate CA certificate 426, which may be signed/endorsed by the DevID private key 412. The Seed_for_leaf 430 and the Identity 440 of the running firmware (boot-time firmware or new firmware) may be used to derive the Leaf Alias private key (K1 or K2) 442, which may then be used to derive the Leaf Alias public key 444 that may be included in the Leaf Alias certificate 446 (being signed/endorsed by the Intermediate Alias Private Key 422).

Fig. 5 shows the DICE certificate chain before the first seamless update. The certificate chain includes the Root CA 510, one or more intermediate CAs 520 (outside the computing device), the DevID CA 530, the boot-time firmware intermediate CA certificate 540 (associated with PK) and the boot-time firmware Leaf Alias certificate 560 (which is signed, during boot, by the ROM using the Intermediate Alias Private Key (PK) 550. The boot-time firmware's identity may be recorded in the DiceTcbInfo extension of the leaf certificate for external verifiers to validate during attestation. As is evident from Fig. 5., the intermediate CA certificate 540 might not only be used after a seamless update, but also for the leaf certificate of the boot-time firmware. This way, the certificate chain layers are consistent between before and after seamless update, simplifying the implementation of verifiers.

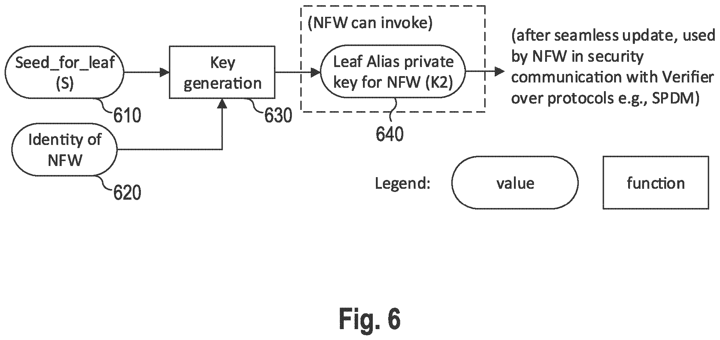

In the following, construction of the (DICE) certificate chain during seamless update is discussed. As shown in Fig. 6, during seamless update, the ROM derives (using key generation block 630) a new Leaf Alias private key 640 for NFW (denoted K2) from S 610 and from the identity 620 of the NFW. Fig. 6 shows a schematic diagram of the ROM firmware deriving a new Leaf Alias Private Key during seamless update.

Fig. 7 shows the DICE certificate chain after a seamless update from OFW (boot-time firmware) to NFW. The ROM invokes PK to sign the new Leaf Alias certificate. The certificate chain includes the Root CA 710, one or more intermediate CAs 720 (outside the computing device), the DevID CA 730, the boot-time firmware intermediate CA certificate 740 (associated with PK) and the NFW Leaf Alias certificate 760 (which is signed, during seamless update, by the ROM using the Intermediate Alias Private Key (PK) 750. The NFW's identity may be recorded in the DiceTcbInfo extension of the leaf certificate for external verifiers to validate during attestation. The intermediate CA is not updated, and it remains reflecting the BTFW's identity, as the PK was derived with the BTFW's identity.

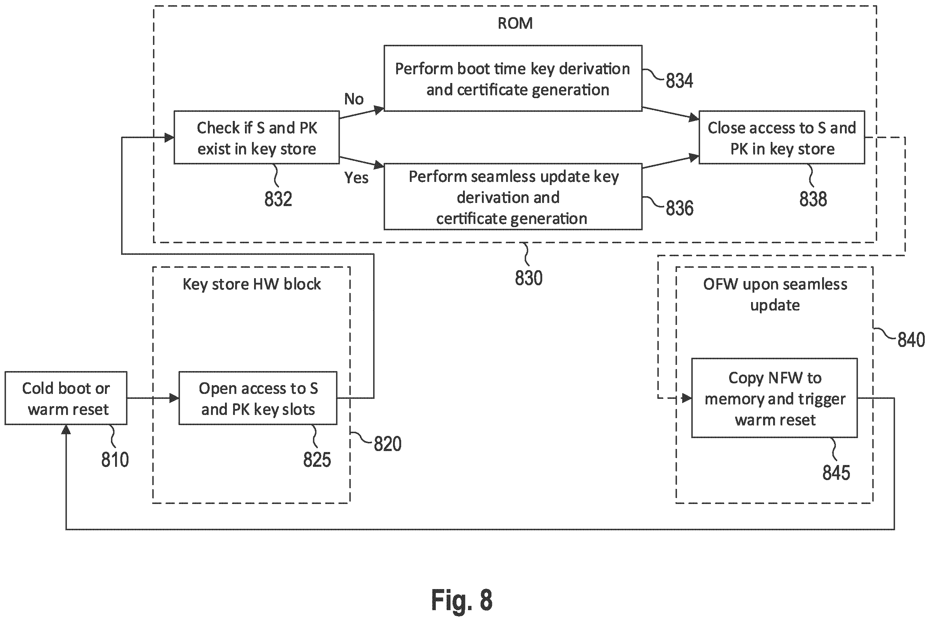

In the following, the key-store hardware block and overall flow is shown. Fig. 8 shows an example flow for cold boot and seamless update. To support the key and certificate generation, a key store hardware block 820 with the following properties may be implemented: The ROM or firmware can generate keys into key slots of the key store. The key in a key slot may be invoked by ROM or firmware for cryptographic operations (such as key generation and signature generation) but cannot be read out. Values in all key slots may be lost at power down. A "close access" attribute may be supported for each key slot: The ROM or firmware can set the "close access" attribute for a specific key slot to prevent access to the key slot (including provision a new value, delete the current value, or invoke the value for crypto operations), until warm reset. Access may be reopened automatically upon warm reset.

During cold boot 810, the key store hardware block 820 may open 825 access to S and PK key slots, and the ROM 830 will check 832 if S and PK exist in the key store, not find S and PK in the key store, so it generates 834 S and PK (per Fig. 3) into their key slots. After deriving K1 and signing the BTFW Leaf Alias cert with PK, the ROM 830 closes 838 access to S and PK to prevent access from the BTFW.

During seamless update 840, the OFW may copy 845 the NFW to memory and trigger warm reset 810 and pass the control back to the ROM 830. Upon the warm reset, the key slots of S and PK may be reopened 825. The ROM 830 finds that S and PK are available in the key store and understands that this is a seamless update flow (instead of a cold boot). Next, the ROM may perform necessary operations 836 for loading the NFW (such as verifying vendor's signature on NFW), deriving K2 from S (per Fig. 6), and signing NFW Leaf Alias cert with PK (per Fig. 7). Then, the ROM 830 may close access to S and PK to prevent access from NFW. Even if the OFW is compromised and does not trigger a warm reset, the OFW would not be able to generate a NFW Leaf Alias cert and maliciously attest itself as NFW to a verifier, because OFW cannot access the PK.

In some examples of the proposed concept, revocation and recovery may be considered. The reason for not unlocking UDS during seamless update is to protect UDS from potential compromise, in case of vulnerability in ROM that could expose secrets at runtime. Therefore, the scenario of ROM bugs that expose S and/or PK - secrets available to ROM - at runtime may also be considered. Fortunately, S and PK are derived from the identity of BTFW, hence revocable and recoverable.

Two types of ROM bugs may be considered. If the ROM bug can be patched by firmware, then firmware releases that do NOT include the patch for the ROM bug may be revoked in a CRL (Certificate Revocation List). Such firmware might not contain any known bugs itself. If the ROM bug cannot be patched by firmware, then this platform might no longer perform secure seamless updates. The vendor may publish a Security Advisory and ask customers to always run a full firmware update (that requires reboot) for patching firmware vulnerabilities. When a firmware release is revoked (because of firmware bugs and/or lacking ROM patch), both its BTFW Intermediate CA certificate and its Leaf Alias certificate may be revoked. Since these two certificates are issued by different CAs, the vendor may sue two CRLs for revoking them, respectively.

More details and aspects of the concept for certificate chain construction are mentioned in connection with the proposed concept or one or more examples described above or below (e.g., Fig. 1a to 1b). The concept for certificate chain construction may comprise one or more additional optional features corresponding to one or more aspects of the proposed concept, or one or more examples described above or below.

In the following, some examples of the proposed concept are presented:
An example (e.g., example 1) relates to an apparatus (10) for a computing device (100), the apparatus comprising interface circuitry (12), machine-readable instructions, and processor circuitry (14) to execute the machine-readable instructions to obtain information on an identity of a firmware being used to operate the computing device, generate a leaf certificate for the firmware being used to operate the computing device based on the identity of the firmware being used to operate the computing device and using an intermediate certificate being generated based on an identity of a firmware having been used during a cold boot of the computing device, and provide a certificate chain comprising the leaf certificate for an external verifier.

Another example (e.g., example 2) relates to a previous example (e.g., example 1) or to any other example, further comprising that the processor circuitry is to execute the machine-readable instructions to generate the leaf certificate, after a seamless firmware update, for the firmware being used after the seamless firmware update.

Another example (e.g., example 3) relates to a previous example (e.g., example 2) or to any other example, further comprising that the firmware being used after the seamless firmware update is different from the firmware having been used during the cold boot of the computing device.

Another example (e.g., example 4) relates to a previous example (e.g., example 3) or to any other example, further comprising that the processor circuitry is to execute the machine-readable instructions to generate a first leaf certificate for the firmware having been used during the cold boot of the computing device during the cold boot of the computing device, and to generate a second leaf certificate, after the seamless firmware update, for the firmware being used after the seamless firmware update.

Another example (e.g., example 5) relates to a previous example (e.g., one of the examples 1 to 4) or to any other example, further comprising that the processor circuitry is to execute the machine-readable instructions to generate, during a cold boot of the computing device, the intermediate certificate, a private key associated with the intermediate certificate, and a seed for generating the leaf certificate, and to generate the leaf certificate using the intermediate certificate and using the seed.

Another example (e.g., example 6) relates to a previous example (e.g., example 5) or to any other example, further comprising that the intermediate certificate is generated based on a unique device secret of the computing device and based on the identity of the firmware having been used during a cold boot of the computing device.

Another example (e.g., example 7) relates to a previous example (e.g., example 6) or to any other example, further comprising that the unique device secret is unavailable after cold boot of the computing device.

Another example (e.g., example 8) relates to a previous example (e.g., one of the examples 5 to 7) or to any other example, further comprising that the leaf certificate is generated using the intermediate certificate and includes a leaf public key derived from the seed and the identity of the firmware being used to operate the computing device.

Another example (e.g., example 9) relates to a previous example (e.g., one of the examples 5 to 8) or to any other example, further comprising that the apparatus comprises storage circuitry, wherein the processor circuitry is to execute the machine-readable instructions to store the intermediate certificate, the private key associated with the intermediate certificate and the seed in a portion (16b) of the storage circuitry (16) accessible during the cold boot or after a seamless update of the computing device.

Another example (e.g., example 10) relates to a previous example (e.g., one of the examples 1 to 9) or to any other example, further comprising that the processor circuitry is to execute the machine-readable instructions to derive, during a cold boot of the computing device, a device identifier private key from a unique device secret of the computing device, with the intermediate certificate being signed or endorsed by the device identifier private key.

Another example (e.g., example 11) relates to a previous example (e.g., one of the examples 1 to 10) or to any other example, further comprising that the intermediate certificate and the leaf certificate are part of a hardware root of trust certificate chain.

Another example (e.g., example 12) relates to a previous example (e.g., example 11) or to any other example, further comprising that the hardware root of trust certificate chain is a Device Identifier Composition Engine (DICE) certificate chain.

Another example (e.g., example 13) relates to a previous example (e.g., one of the examples 1 to 12) or to any other example, further comprising that the certificate chain comprising the leaf certificate is provided to the external verifier as part of a device attestation protocol.

An example (e.g., example 14) relates to an apparatus (10) for a computing device (100), the apparatus comprising processor circuitry (14) configured to obtain information on an identity of a firmware being used to operate the computing device, generate a leaf certificate for the firmware being used to operate the computing device based on the identity of the firmware being used to operate the computing device and using an intermediate certificate being generated based on an identity of a firmware having been used during a cold boot of the computing device, and provide a certificate chain comprising the leaf certificate for an external verifier.

An example (e.g., example 15) relates to a device (10) for a computing device (100), the device comprising means for processing (14) for obtaining information on an identity of a firmware being used to operate the computing device, generating a leaf certificate for the firmware being used to operate the computing device based on the identity of the firmware being used to operate the computing device and using an intermediate certificate being generated based on an identity of a firmware having been used during a cold boot of the computing device, and providing a certificate chain comprising the leaf certificate for an external verifier.

Another example (e.g., example 16) relates to a computing device (100) comprising the apparatus (10) or device (10) according to one of the examples 1 to 15 (or according to any other example).

Another example (e.g., example 17) relates to a previous example (e.g., example 16) or to any other example, further comprising that the computing device is a computer system.

Another example (e.g., example 18) relates to a previous example (e.g., example 16) or to any other example, further comprising that the computing device is a mobile device.

An example (e.g., example 19) relates to a method for a computing device (100), the method comprising obtaining (120) information on an identity of a firmware being used to operate the computing device, generating (130) a leaf certificate for the firmware being used to operate the computing device based on the identity of the firmware being used to operate the computing device and using an intermediate certificate being generated based on an identity of a firmware having been used during a cold boot of the computing device, and providing (140) a certificate chain comprising the leaf certificate for an external verifier.

Another example (e.g., example 20) relates to a previous example (e.g., example 19) or to any other example, further comprising that the method comprises generating the leaf certificate, after a seamless firmware update, for the firmware being used after the seamless firmware update.

Another example (e.g., example 21) relates to a previous example (e.g., example 20) or to any other example, further comprising that the firmware being used after the seamless firmware update is different from the firmware having been used during the cold boot of the computing device.

Another example (e.g., example 22) relates to a previous example (e.g., example 21) or to any other example, further comprising that the method comprises generating (130) a first leaf certificate for the firmware having been used during the cold boot of the computing device during the cold boot (110) of the computing device, and generating (130) a second leaf certificate, after the seamless firmware update, for the firmware being used after the seamless firmware update.

Another example (e.g., example 23) relates to a previous example (e.g., one of the examples 19 to 22) or to any other example, further comprising that the method comprises generating (114), during a cold boot of the computing device, the intermediate certificate, a private key associated with the intermediate certificate, and a seed for generating the leaf certificate, and generating (130) the leaf certificate using the intermediate certificate and using the seed.

Another example (e.g., example 24) relates to a previous example (e.g., example 23) or to any other example, further comprising that the intermediate certificate is generated based on a unique device secret of the computing device and based on the identity of the firmware having been used during a cold boot of the computing device.

Another example (e.g., example 25) relates to a previous example (e.g., example 24) or to any other example, further comprising that the unique device secret is unavailable after cold boot of the computing device.

Another example (e.g., example 26) relates to a previous example (e.g., one of the examples 23 to 25) or to any other example, further comprising that the leaf certificate is generated using the intermediate certificate and includes a leaf public key derived from the seed and the identity of the firmware being used to operate the computing device.

Another example (e.g., example 27) relates to a previous example (e.g., one of the examples 23 to 26) or to any other example, further comprising that the method comprises storing (116) the intermediate certificate, the private key associated with the intermediate certificate and the seed in a portion (16b) of storage circuitry (16) accessible during the cold boot or after a seamless update of the computing device.

Another example (e.g., example 28) relates to a previous example (e.g., one of the examples 19 to 27) or to any other example, further comprising that deriving (112), during a cold boot of the computing device, a device identifier private key from a unique device secret of the computing device, with the intermediate certificate being signed or endorsed by the device identifier private key.

Another example (e.g., example 29) relates to a previous example (e.g., one of the examples 19 to 28) or to any other example, further comprising that the intermediate certificate and the leaf certificate are part of a hardware root of trust certificate chain.

Another example (e.g., example 30) relates to a previous example (e.g., example 29) or to any other example, further comprising that the hardware root of trust certificate chain is a Device Identifier Composition Engine (DICE) certificate chain.

Another example (e.g., example 31) relates to a previous example (e.g., one of the examples 19 to 30) or to any other example, further comprising that the certificate chain comprising the leaf certificate is provided to the external verifier as part of a device attestation protocol.

Another example (e.g., example 32) relates to a computing device (100) being configured to perform the method according to one of the examples 19 to 31 (or according to any other example).

Another example (e.g., example 33) relates to a non-transitory, computer-readable medium comprising a program code that, when the program code is executed on a processor, a computer, or a programmable hardware component, causes the processor, computer, or programmable hardware component to perform the method of one of the examples 19 to 31 (or according to any other example).

Another example (e.g., example 34) relates to a non-transitory machine-readable storage medium including program code, when executed, to cause a machine to perform the method of one of the examples 19 to 31.

Another example (e.g., example 35) relates to a computer program having a program code for performing the method of one of the examples 19 to 31 when the computer program is executed on a computer, a processor, or a programmable hardware component.

Another example (e.g., example 36) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus for a computing device, the apparatus comprising interface circuitry, machine-readable instructions, and processor circuitry to execute the machine-readable instructions to:
obtain information on an identity of a firmware being used to operate the computing device;
generate a leaf certificate for the firmware being used to operate the computing device based on the identity of the firmware being used to operate the computing device and using an intermediate certificate being generated based on an identity of a firmware having been used during a cold boot of the computing device; and
provide a certificate chain comprising the leaf certificate for an external verifier.

2. The apparatus according to claim 1, wherein the processor circuitry is to execute the machine-readable instructions to generate the leaf certificate, after a seamless firmware update, for the firmware being used after the seamless firmware update.

3. The apparatus according to claim 2, wherein the firmware being used after the seamless firmware update is different from the firmware having been used during the cold boot of the computing device.

4. The apparatus according to claim 3, wherein the processor circuitry is to execute the machine-readable instructions to generate a first leaf certificate for the firmware having been used during the cold boot of the computing device during the cold boot of the computing device, and to generate a second leaf certificate, after the seamless firmware update, for the firmware being used after the seamless firmware update.

5. The apparatus according to one of the claims 1 to 4, wherein the processor circuitry is to execute the machine-readable instructions to generate, during a cold boot of the computing device, the intermediate certificate, a private key associated with the intermediate certificate, and a seed for generating the leaf certificate, and to generate the leaf certificate using the intermediate certificate and using the seed.

6. The apparatus according to claim 5, wherein the intermediate certificate is generated based on a unique device secret of the computing device and based on the identity of the firmware having been used during a cold boot of the computing device.

7. The apparatus according to claim 6, wherein the unique device secret is unavailable after cold boot of the computing device.

8. The apparatus according to one of the claims 5 to 7, wherein the leaf certificate is generated using the intermediate certificate and includes a leaf public key derived from the seed and the identity of the firmware being used to operate the computing device.

9. The apparatus according to one of the claims 5 to 8, wherein the apparatus comprises storage circuitry, wherein the processor circuitry is to execute the machine-readable instructions to store the intermediate certificate, the private key associated with the intermediate certificate and the seed in a portion of the storage circuitry accessible during the cold boot or after a seamless update of the computing device.

10. The apparatus according to one of the claims 1 to 9, wherein the processor circuitry is to execute the machine-readable instructions to derive, during a cold boot of the computing device, a device identifier private key from a unique device secret of the computing device, with the intermediate certificate being signed or endorsed by the device identifier private key.

11. The apparatus according to one of the claims 1 to 10, wherein the intermediate certificate and the leaf certificate are part of a hardware root of trust certificate chain.

12. The apparatus according to claim 11, wherein the hardware root of trust certificate chain is a Device Identifier Composition Engine (DICE) certificate chain.

13. The apparatus according to one of the claims 1 to 12, wherein the certificate chain comprising the leaf certificate is provided to the external verifier as part of a device attestation protocol.

14. A method for a computing device, the method comprising:
obtaining information on an identity of a firmware being used to operate the computing device;
generating a leaf certificate for the firmware being used to operate the computing device based on the identity of the firmware being used to operate the computing device and using an intermediate certificate being generated based on an identity of a firmware having been used during a cold boot of the computing device; and
providing a certificate chain comprising the leaf certificate for an external verifier.

15. A non-transitory, computer-readable medium comprising a program code that, when the program code is executed on a processor, a computer, or a programmable hardware component, causes the processor, computer, or programmable hardware component to perform the method of claim 14.
